# DEMANDE DE BREVET EUROPEEN

(11) **EP 2 412 235 A1**
(43) Date de publication de la demande: **01.02.2012**
(21) Numéro de dépôt: 11175722.5
(22) Date de dépôt: 28.07.2011
(51) Int. Cl.: A01K 39/06

(54) **Logement collectif pour le gavage de palmipèdes**

(30) Priorité: 29.07.2010 FR 1056238
(71) Demandeur: Elevage Service, 40501 Saint Sever (FR)
(72) Inventeur: Paraillous, Guy, 40230 Tosse (FR); Feigna, Daniel, 40180 Saugnac et Cambran (FR)
(74) Mandataire: Maupilier, Didier

(57) **Abrégé**

Un logement collectif (10) pour le gavage de palmipèdes comporte un plancher (11), une paroi arrière (12) fixe sur un bord arrière du logement, deux parois latérales (13) fixes sur des bords latéraux du logement et une paroi avant (20) sur un bord avant du logement.

La paroi avant (20) comporte un abattant (22) formant une partie supérieure de cette paroi avant, mobile entre au moins une position relevée et au moins une position abaissée.

L'abattant (22) comporte un toit (23) et un volet arrière (24) solidaire du toit au niveau d'un bord de liaison (223), dans une position abaissée le toit (23) étant sensiblement parallèle au plancher (11) et le volet arrière (24) étant sensiblement vertical en avant de la paroi arrière (12) dans une position intermédiaire entre ladite paroi arrière (12) et la paroi avant (20).

## Description

La présente invention appartient au domaine des cages utilisées dans la production animalière destinées aux volatiles et en particulier destinées aux palmipèdes pendant une période de gavage.

Plus particulièrement l'invention concerne un logement collectif dans lequel les palmipèdes sont libres d'évoluer en dehors des opérations de gavage et sont immobilisés dans un espace réduit pendant les opérations de gavage.

Pour le gavage des palmipèdes, oies et canards essentiellement, il est connu de placer les palmipèdes dans des cages collectives suffisamment spacieuses pour accueillir plusieurs palmipèdes tout en leur procurant un espace suffisant pour leur permettre de s'ébattre, c'est à dire avec une certaine liberté de bouger et d'étendre leurs ailes.

Lors de la prise des repas, il est cependant nécessaire dans ce type de cages collectives d'immobiliser les palmipèdes pour que le gaveur qui distribue les repas aux différents animaux puisse saisir individuellement chaque animal sans difficulté.

Il est connu pour cela de maintenir les animaux immobilisés en les plaquant au sol de la cage au moyen d'une grille largement ajourée par laquelle les palmipèdes passent naturellement le cou. Cette grille est relevée en dehors des opérations de gavage pour former une partie de la paroi avant de la cage.

En outre, afin que les animaux soient immobilisés au plus près du gaveur, c'est à dire au plus prés de la paroi avant de la cage, il est également connu de mettre en oeuvre une paroi arrière de la cage qui se déplace par un mouvement de rotation autour d'un axe supérieur comme dans le document FR2867353 ou de translation vers la paroi avant comme dans le document FR2820280 afin de repousser les animaux vers cette paroi avant de les immobiliser.

Une solution voisine consiste à relever une partie arrière du plancher de la cage pour obtenir le même effet sur les palmipèdes comme dans la solution proposée par le document FR2823066

Un inconvénient majeur de ces solutions tient dans leur complexité relative qui nécessite de mettre en oeuvre plusieurs mouvements indépendants de diverses parties mobiles, qui est à la fois une source de fragilité et de temps d'opération pour le gaveur et qui augmente les risques de blesser des animaux.

En outre le montage des cages en ligne conduit à déplacer des éléments lourds et volumineux imposant l'utilisation de réducteurs ou de motorisation, éléments coûteux, et donc dans ces solutions au moins deux réducteurs et ou motorisation par ligne de cage pour répondre aux déplacements des éléments indépendants.

La présente invention permet de résoudre ces problèmes au moyen d'un logement collectif pour le gavage de palmipèdes, comportant un plancher, une paroi arrière fixe sur un bord arrière du logement, deux parois latérales fixes sur des bords latéraux du logement et une paroi avant sur un bord avant du logement, dans lequel logement la paroi avant comporte un abattant, formant une partie supérieure de ladite paroi avant, mobile entre au moins une position relevée et au moins une position abaissée et dans lequel l'abattant comporte un toit et un volet arrière solidaire du toit au niveau d'un bord de liaison entre le toit et le volet arrière.

En outre, dans la position abaissée de l'abattant, le toit est sensiblement parallèle au plancher et le volet arrière est sensiblement vertical en avant de la paroi arrière dans le logement, dans une position intermédiaire entre la paroi arrière et la paroi avant, de sorte que les animaux sont confinés dans un espace réduit du logement rapproché du bord avant pour faciliter le travail du gaveur.

Pour entraîner les animaux en direction du bord avant du logement avec le minimum de risque de blesser un animal, lors de la conversion depuis la position relevée vers la position abaissée, l'abattant est déplacé suivant un mouvement de rotation du toit vers l'intérieur du logement et suivant un mouvement de traction avant du volet arrière.

De préférence, la trajectoire décrite par le côté arrière de l'abattant, situé du côté du bord arrière du logement, est proche de la paroi arrière, sensiblement tangente ou sécante avec la paroi arrière, lors d'une partie au moins de son mouvement de descente vers le plancher pendant la conversion ce qui limite le risque de coincer un animal lorsque l'abattant est déplacé vers l'intérieur de la cage.

Une telle trajectoire est obtenue avec de meilleurs résultats en agençant la paroi arrière inclinée de sorte que la partie inférieure de la paroi arrière au niveau du plancher est plus proche du bord avant du logement que la partie supérieure de cette paroi arrière.

Le risque de coincement d'un animal est encore diminué, en particulier lorsque l'animal peut être amené à passer le cou entre des barreaux formant la paroi arrière, ces barreaux étant situés dans un plan vertical, au moyen d'un volet arrière qui comporte au niveau du côté arrière des barreaux libres à leurs extrémités formant un peigne, ces barreaux libres à leurs extrémités étant agencés suivant la largeur du logement pour se trouver en vis à vis de barreaux de la paroi arrière ou légèrement décalés d'un ordre de grandeur d'un rayon des barreaux, en particulier pour permettre le croisement des barreaux du volet arrière avec ceux de la paroi arrière lors de la conversion.

De préférence, pour introduire et extraire les animaux de la cage par une ouverture élargie du toit et sans entraver le travail du gaveur qui est conduit à déplacer les animaux suivant la largeur du logement en position abaissée de l'abattant, le toit comporte des barreaux agencés horizontalement, dans la position relevée de l'abattant, orientés suivant une largeur du logement de sorte à former en position relevée une partie supérieure de la paroi avant du logement, et au moins un barreau du toit est mobile de sorte à former dans le toit un passage libre élargi entre l'intérieur du logement collectif et l'extérieur du logement.

Dans une forme de réalisation du logement collectif, le toit est fixé à un arbre d'entraînement mobile en rotation autour d'un axe situé du côté du bord avant du logement, parallèle au bord avant du logement et au-dessus du plancher, et le volet arrière est solidaire du toit et articulé au toit au niveau du bord de liaison entre le volet arrière et le toit de sorte que le mouvement de descente et le mouvement de traction avant peuvent être séparés mais réalisé par une seule commande.

Pour cela les mouvement du toit et du volet arrière sont liés et le volet arrière est asservi en rotation en fonction de la position du toit par une bielle articulée à une première extrémité sur une partie fixe du logement et articulée à une seconde extrémité sur le volet arrière.

Dans une autre forme de réalisation, l'abattant du logement collectif est solidaire d'un arbre d'entraînement, mobile en rotation autour d'un axe situé du côté du bord avant du logement, parallèle au bord avant du logement et au-dessus du plancher, par l'intermédiaire d'au moins une manivelle fixée à l'arbre d'entraînement, l'abattant étant lui articulé au niveau de son côté avant sur la manivelle autour d'un axe parallèle à l'axe de l'arbre d'entraînement à une distance **RA** de l'axe dudit arbre d'entraînement afin de permettre par la seule rotation de l'arbre d'entraînement un mouvement de rotation et un mouvement de translation.

Afin de permettre de maintenir l'abattant en position relevée et d'accompagner sa descente et sa remontée, une ou des butées de rotation basse sont agencées sur la ou les manivelles et ou sur l'abattant et déterminent une position inférieure de l'abattant par rapport aux manivelles dans laquelle position le toit est sensiblement dans le prolongement des manivelles, ce qui a également pour effet de maintenir l'abattant plus éloigné de l'arbre d'entraînement lors de la descente de l'abattant.

Pour éviter que le toit ne soit soulevé par les animaux en position abaissée, des butées anti-relevage sont agencées pour s'opposer à un déplacement vers le haut de l'abattant, ces butées anti-relevage n'étant fonctionnelle que lorsque l'abattant est dans la position abaissée.

Avantageusement, les logements sont agencés en modules de deux logements collectifs conformes à l'invention.

Outre les bénéfices apportés en terme de réalisation et d'agencement des logements dans un site d'exploitation, les deux logements sont assemblés par leurs bords arrières, et un abreuvoir est agencé entre les parois arrières inclinées des logements collectifs au niveau de la partie basse laissée libre entre les deux logement ainsi agencés.

Pour bénéficier d'une commande unique pour réaliser la conversion d'une série de logements collectifs, de préférence une pluralité de logements collectifs conformes à l'invention ou de modules de deux logements collectifs sont agencés suivant une rangée dans laquelle les logements ou les modules de deux logements sont juxtaposés par leurs bords latéraux, la séparation en deux logements voisins étant réalisée par une paroi latérale commune.

D'autres caractéristiques et avantages de l'invention seront mieux compris à la lecture de la description qui suit d'exemples de réalisation de l'invention non limitatifs en référence aux dessins qui représentent :
- Figure 1 :: Une vue en perspective d'un logement et de ses principaux éléments, le détail la présentant le principe d'un barreau mobile servant de porte sur l'abattant ;
- Figures 2a, 2b et 2c :: une vue schématique en coupe du fonctionnement d'un premier exemple de réalisation avec un abattant comportant un volet arrière articulé ;
- Figures 3a, 3b et 3c :: une vue schématique en coupe du fonctionnement d'un deuxième exemple de réalisation avec un abattant comportant un volet arrière fixe ;
- Figure 4 :: une vue en perspective d'un module de deux logements comportant un abreuvoir central.

Un logement collectif 10 suivant l'invention, plus simplement désigné logement, est destiné à contenir plusieurs palmipèdes, au moins deux, en particulier des canards ou des oies, pendant une période d'alimentation forcée dite de gavage.

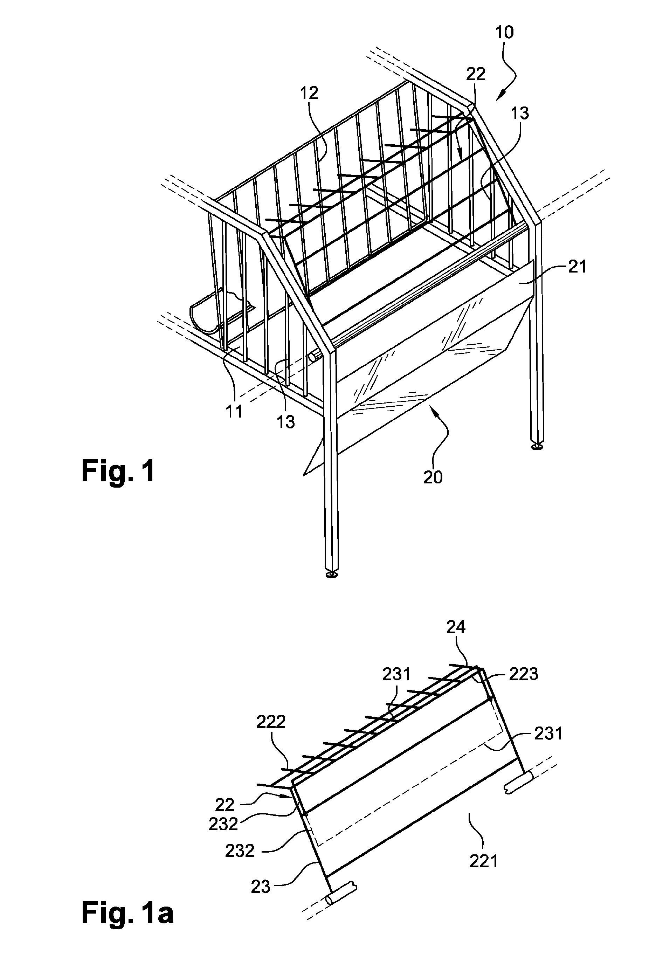

Comme illustré sur la figure 1, le logement 10 est principalement constituée d'un plancher 11 sensiblement horizontal, d'une paroi de fond 12 du côté d'un bord arrière du logement, de deux parois latérales 13 sensiblement verticales sur des bords latéraux du logement et d'une paroi avant 20 sur un bord avant du logement, les dites parois de fond, latérales et avant constituant des côtés du logement au-dessus du plancher entre lesquels les palmipèdes sont circonscrits.

La distance au niveau du plancher 11 entre la paroi avant 20 et la paroi de fond 12 est désignée « profondeur » du logement 10, la distance entre les parois latérales 13 est désignée "largeur" du logement 10 et les distances verticales au-dessus du plancher 11 sont désignées "hauteur"

Le plancher du logement et les différentes parois sont réalisées principalement sous la forme de grilles afin de permettre une bonne ventilation de l'espace occupé par les animaux et d'éviter l'accumulation de souillures qui sont évacuées naturellement par gravité entre les barreaux des grilles.

La paroi avant 20 du logement 10 comporte une partie inférieure 21 à proximité du plancher 11, a priori fixe pendant l'utilisation du logement, et d'une partie supérieure 22 mobile entre deux positions extrêmes :
- une position relevée
- une position abaissée

La partie inférieure 21, dite protection avant, permet de fermer le logement en partie basse sur son côté avant.

Dans le logement collectif de l'invention les parois sont agencées pour être fixes lors de l'utilisation du logement à l'exception de la partie supérieure 22 de la paroi avant.

La partie supérieure 22 est désigné abattant.

L'abattant 22 est de forme générale rectangulaire avec un côté avant 221 solidaire d'une structure du logement 10 à proximité du bord avant du logement et un côté arrière 222 libre situé sur l'abattant à l'opposé du côté avant.

L'abattant 22 comporte lui-même deux sous-ensembles principaux : un toit 23 et un volet arrière 24, qui sont solidaires au niveau d'un bord de liaison 223 situé sur l'abattant 22 entre le côté avant 221 et le côté arrière 222.

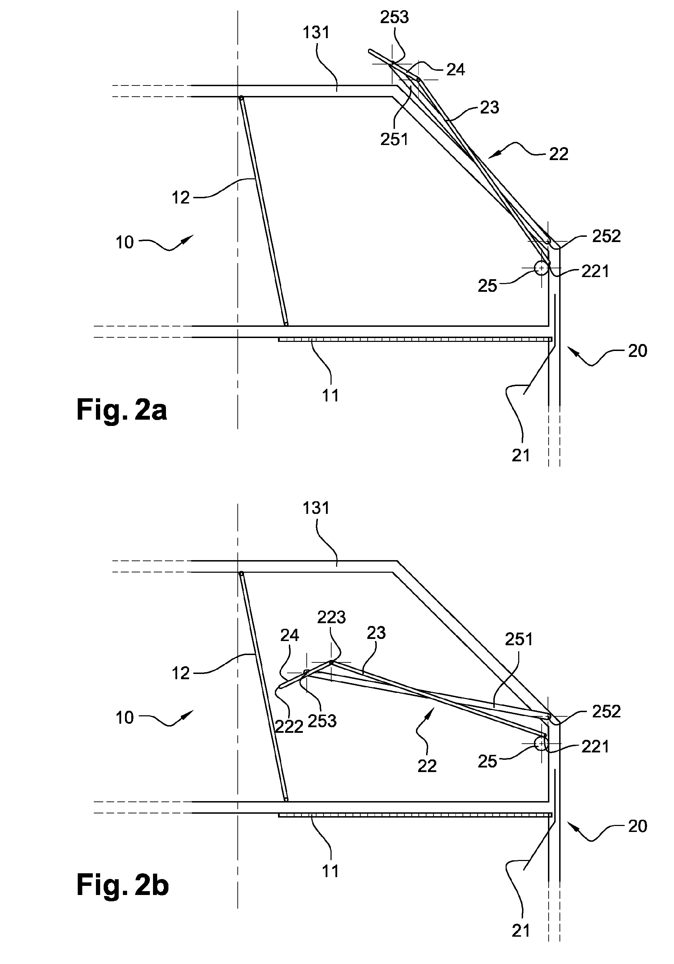

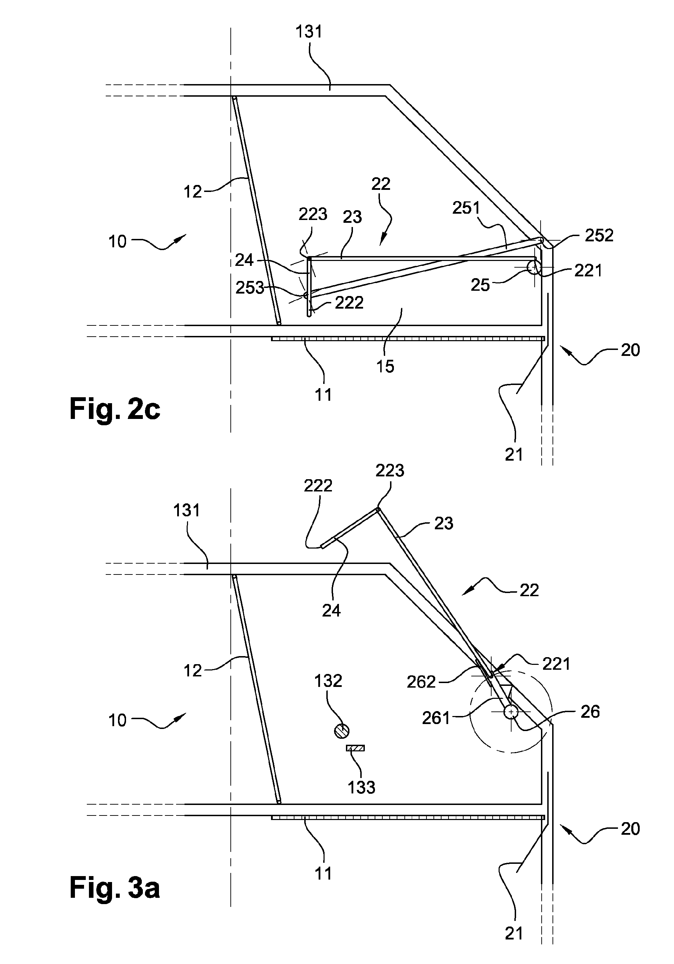

Comme visible en perspective sur les figures 1 et 1a et de profil sur les vues en coupe des figures 2a à 2c et 3a à 3c, le bord de liaison 223 s'étend sur la largeur de l'abattant, les côtés avant 221, arrière 222 et le bord de liaison 223 étant sensiblement parallèle.

Dans la position relevée de l'abattant 22, comme illustrée sur la figure 1, l'espace intérieur du logement 10 est dégagé de tout obstacle de sorte que les animaux qui s'y trouvent peuvent de déplacer et s'ébattre librement dans tout l'espace du logement.

Dans cette position relevée, l'abattant 22 est dans une position plus ou moins verticale, de préférence légèrement incliné vers l'intérieur du logement 10 d'un angle compris entre 0 et 60 degrés par rapport à la verticale qui ne réduit pas sensiblement l'espace accessible aux animaux.

On remarquera que dans cette position relevée une partie la plus haute de l'abattant est située de préférence sensiblement à la même hauteur que celles des parties hautes du fond ou des parois latérales, voire au-dessus, de sorte que les animaux ne puissent pas s'échapper du logement par le haut, sauf à prévoir si besoin une fermeture supérieure du logement collectif. L'abattant est également d'une largeur correspondant sensiblement à la largeur de la paroi avant 10 dont il est une partie, mais cette largeur est limitée de sorte que ledit abattant puisse être abaissé entre les parois latérales 13 comme illustré sur la figure 1.

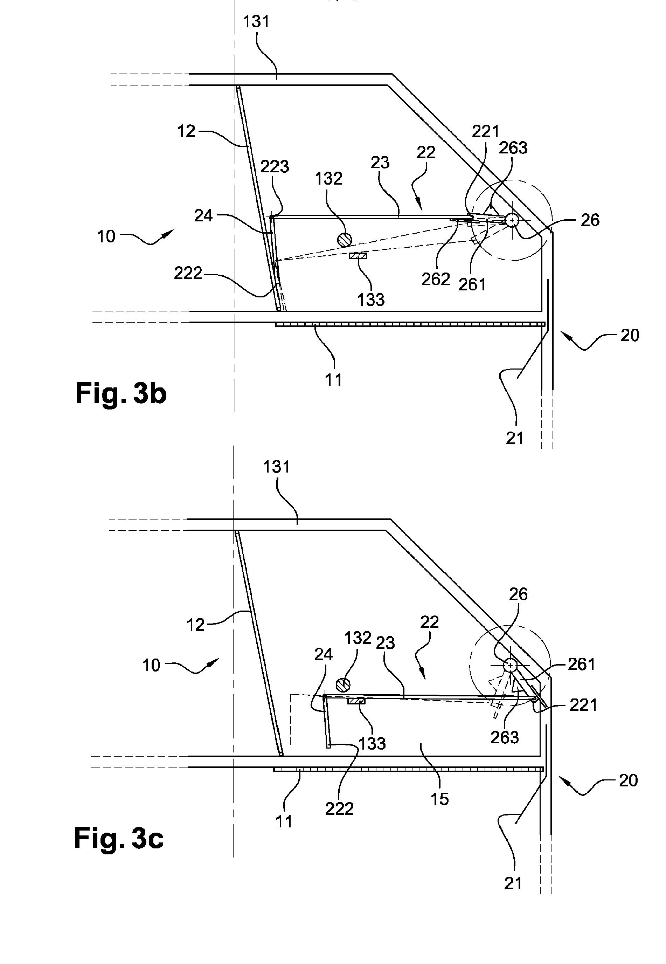

Dans la position abaissée de l'abattant 22, comme dans le cas des figures 2c et 3c, le toit 23 est sensiblement parallèle au plancher alors que le volet 24 est d'une part sensiblement vertical, c'est-à-dire sensiblement parallèle à la paroi arrière 12, et d'autre part dans une position avancée par rapport à la paroi arrière 12, entre ladite paroi arrière 12 et la partie fixe de la paroi avant 20.

Les expressions "position sensiblement verticale" et « sensiblement parallèle à la paroi arrière » pour le volet 24 doivent ici être considérées de manière très extensive. En effet, le volet 24 est avantageusement dans la configuration abaissée sensiblement perpendiculaire au plancher 11, mais il peut en pratique s'éloigner de cette stricte verticalité et présenter une inclinaison autant qu'elle ne perturbe pas le fonctionnement recherché comme il sera compris de la description et la paroi arrière n'est quant à elle pas obligatoirement strictement verticale comme le montre les figures de l'exemple de réalisation décrit.

En outre, même si le volet arrière dans une forme simple est sensiblement plan, cette forme n'est pas obligatoire et le volet peut sans inconvénient particulier, sauf éventuellement son coût de réalisation, présenter un profil courbe plus ou moins cintré non illustré.

Dans la position abaissée, l'abattant 22 délimite alors un volume restreint 15 du logement 10 en hauteur et en profondeur, entre le plancher et les parois latérales, étant compris que la largeur de l'abattant correspond sensiblement à la largeur du logement et que le volet 24 matérialise la profondeur du volume restreint (figures 2c et 3c).

Le volume restreint 15 délimité par l'abattant 22 permet de confiner momentanément les animaux à proximité de la paroi avant 20 et de limiter leurs possibilités de mouvements. Le travail d'un gaveur chargé de donner la nourriture aux animaux s'en trouve donc facilité.

L'abattant 22 est amené de la position relevée à la position abaissé suivant un mouvement dit de conversion comme par exemple illustré sur la série de figures 2a à 2c, ou 3a à 3c.

Lors du mouvement de conversion, dans un premier mouvement dit de descente, l'abattant 22 est descendu vers l'intérieur du logement de sorte que le côté arrière 222 se trouve à proximité de la paroi arrière 12 au moins pendant une partie du mouvement précédant la position totalement abaissée du toit 23.

Par proximité de la paroi arrière il doit être compris qu'une trajectoire, dans les vues de profil des figures 2a à 3c et 3a à 3c, du côté arrière 222 est quasiment tangente à la paroi arrière 12, voire intersecte cette paroi arrière ce qui sera rendu possible par un agencement particulier du volet arrière 24 et de la paroi arrière 12 comme il sera décrit ultérieurement.

Lors du mouvement de conversion, dans un second mouvement dit de traction avant, le volet arrière 24 est rapproché vers l'avant du logement.

Suivant la décomposition obtenue du mouvement de conversion en un mouvement de descente combiné avec ou se poursuivant par un mouvement de traction avant, les animaux présents dans le logement sont soumis à un balayage par l'abattant, plus particulièrement par le volet arrière lors de son déplacement vers l'avant du logement, qui limite le risque que des animaux se trouvent coincés entre des éléments mobiles multiples.

Pour libérer les animaux et afin qu'ils retrouvent la possibilité de se déplacer à nouveau dans le logement après avoir été confiné, l'abattant 22 est replacé dans sa position initiale relevée.

Pour ce passage depuis la position abaissée vers la position relevée, l'abattant 22 peut être simplement relevé car il n'y a pas de risque de coincer un animal, cependant il peut être réalisée par un mouvement inverse de celui de la conversion si une séquence particulière est imposée par le mécanisme utilisé pour effectuer la conversion.

Différents dispositifs permettent d'effectuer la conversion et les différents mouvements nécessaires pour un logement collectif conforme à l'invention dont deux formes de réalisations sont décrites de manières détaillées ci-après.

Dans une première forme de réalisation illustrée sur les figures 2a, 2b et 2c le toit 23 de l'abattant 22 est solidaire rigidement, du côté avant 221 de l'abattant, d'un arbre d'entraînement 25 déterminant un axe de rotation orienté suivant la largeur du logement, parallèle au bord avant et parallèle au plancher 11.

L'arbre 25 est situé à proximité du bord avant du logement 10 et au-dessus dudit plancher.

**Dans** cette forme de réalisation, le volet arrière 24 est agencé par rapport au toit 23 de manière articulée autour d'un axe correspondant sensiblement au bord de jonction 223 de sorte que ledit volet peut prendre plusieurs positions angulaires autour de cet axe de rotation par rapport au toit 23.

En outre au moins une bielle rigide 251 de longueur **LB** est fixée articulée à une première extrémité 252 sur une structure fixe du logement collectif, avantageusement sur un cadre 131 maintenant également une paroi latérale 13, et fixée articulée à une seconde extrémité 253 sur le volet 24.

Le point d'articulation de la première extrémité 252, situé au-dessus de l'axe de l'arbre d'entraînement 25, décalé d'une hauteur **HB**, la longueur **LB** et la position du point d'articulation de la seconde extrémité 253 sur le volet 24 sont tels que le bord de liaison 223 est toujours situé au-dessus de la bielle quelle que soit la position de l'abattant entre les positions relevée et abaissées pour éviter un alignement des axes d'articulation du dispositif.

Suivant ce montage la position angulaire du volet 24 par rapport au toit se trouve lié à la position angulaire du toit 23 autour de l'axe de rotation de l'arbre 25, la géométrie des différents éléments déterminant un rapport d'automaticité, ici positif, entre le volet et le toit.

Dans le mouvement de conversion obtenu par la rotation de l'arbre d'entraînement 25, l'abattant descend depuis la position relevée, figure 2a, vers l'intérieur du logement et le côté arrière 222 décrit une trajectoire complexe résultat de la combinaison de la position du toit 23 par rapport aux cadres 131 et du volet 24 par rapport au toit 23, liés par la bielle 251, qui tangente la paroi arrière 12 en effectuant le mouvement de traction avant, figure 2b, jusqu'à la position abaissée, figure 2c.

La géométrie des différents éléments est également déterminée pour que, lorsque l'abattant atteint la position abaissée, le toit est sensiblement dans une position horizontale et le volet sensiblement dans une position verticale vers l'avant du logement par rapport à la paroi arrière 12 comme illustré sur la figure 2c.

Pour que la trajectoire du côté arrière 222 de l'abattant soit à proximité de la paroi arrière 12 sur une plus grande distance, avantageusement la paroi arrière 12 est inclinée de sorte que sa partie basse se trouve plus proche du bord avant du logement que sa partie supérieure.

Dans la pratique les dimensions, au moins en surface utilisable par les animaux au niveau du plancher 11, seront fonction du nombre d'animaux devant évoluer dans le logement et de la surface qui sera voulue pour chaque animal, mais le volume restreint 15 limite la profondeur de l'espace, entre le bord avant du logement et le volet arrière 24, dans lequel peuvent se trouver les animaux lorsque l'abattant est en position abaissée.

Dans un exemple de réalisation, une profondeur de 500 mm du logement est réduite pour le volume restreint 15 à environ 380 mm au moyen d'un abattant articulé 245 mm au dessus du plancher, sensiblement la hauteur du volume restreint et comportant un volet arrière 24 de 200 mm, le fond arrière 12 du logement étant incliné d'un angle d'environ 15 degrés.

Dans une deuxième forme de réalisation illustrée sur les figures 3a, 3b et 3c le toit 23 de l'abattant 22 est solidaire de manière articulée, du côté avant 221 de l'abattant, d'un arbre d'entraînement 26 déterminant un axe de rotation orienté suivant la largeur du logement et parallèle au plancher 11.

L'arbre 26 est situé à proximité du bord avant du logement 10 et au-dessus dudit plancher.

L'abattant 22 est solidaire de l'arbre au niveau d'un axe de rotation du toit décalé par rapport à l'axe de l'arbre d'entraînement 26 d'une distance **RA** par l'intermédiaire de manivelles 261 fixée audit arbre d'entraînement et en outre l'axe de rotation du toit est associé à des butées de rotation basse 262 de sorte que l'angle du toit par rapport aux manivelles est limité vers le bas dans une position ou l'abattant 22 est sensiblement dans le prolongement des manivelles 261 comme dans les positions illustrées figure 3a et en trait plein figure 3b.

Dans cette forme de réalisation, le volet arrière 24 est agencé sur le toit 23 de manière fixe au niveau du bord de jonction 223 de sorte que ledit volet conserve une position angulaire constante par rapport au toit 23, par exemple sensiblement perpendiculaire.

Suivant ce mode de réalisation, en position relevée l'arbre d'entraînement 26 est dans une position angulaire telle que les manivelles 261, avantageusement une manivelle au niveau de chaque bord latéral de l'abattant, maintiennent l'abattant 22 relevé, ledit abattant venant par gravité en appui sur les butées de rotation basse 262.

Lors de la conversion depuis la position relevée, figure 3a, la rotation dans le sens approprié de l'arbre de rotation 26 entraîne un mouvement de descente de l'abattant 22 au cours duquel la trajectoire du côté arrière 222 dudit abattant, lui-même situé dans le prolongement des manivelles, tangente la paroi arrière 12, figure 3b.

Lorsque l'abattant 22, soit au niveau du volet arrière 24, soit au niveau du toit 23, arrive sur une butée inférieure, la rotation de l'arbre d'entraînement est poursuivie sans être entravée ni par la butée inférieure ni par la butée de rotation basse 262 qui permet la rotation de l'abattant 22 par rapport aux manivelles 261.

La poursuite de la rotation permet aux manivelles d'entraîner l'abattant dans le mouvement de traction avant, figures 3c, ledit mouvement étant arrêté lorsque les manivelles sont dans une position basse sensiblement verticales.

Ce mode de réalisation présente l'avantage de permettre une modulation de la profondeur du volume restreint 15 en arrêtant le mouvement de rotation de l'arbre d'entraînement 26 plus ou moins avant que les manivelles 261 n'atteignent la position verticale vers le bas, le volet arrière 24 étant alors dans une position relativement reculée, ou plus ou moins après que les manivelles 261 aient atteint la position verticale vers le bas, le volet arrière 24 étant alors dans une position relativement avancée, comme illustré sur la figure 3c entre la position représentée en traits discontinus et celle représentée en traits pleins.

Dans ces différents cas, la position des manivelles influence la hauteur du toit 23 au niveau du côté avant 221, mais cet effet est cependant de faible amplitude et peut être considéré comme négligeable et a priori ne crée pas de gêne dans le fonctionnement du dispositif.

Comme dans le premier mode de réalisation, pour que la trajectoire du côté arrière 222 de l'abattant soit à proximité de la paroi arrière 12 sur une plus grande distance, avantageusement la paroi arrière 12 est inclinée de sorte que sa partie basse se trouve plus proche du bord avant du logement que sa partie haute.

Pour maintenir une hauteur suffisante du volume restreint 15, dans ce mode de réalisation, l'arbre d'entraînement 26 est fixé sur la structure du logement à une hauteur au-dessus du plancher 11 correspondant à la hauteur recherchée du volume restreint 15 augmentée de la longueur de la manivelle.

Une particularité de ce second mode de réalisation tient au fait que, en absence de précaution, l'abattant peut être soulevé par les animaux du logement du fait de l'articulation de l'abattant sur la manivelle.

Afin de palier à ce risque avantageusement des butées anti-relevage sont agencées pour empêcher ou limiter le déplacement possible vers le haut de l'abattant 22 en position basse.

De telles butées anti-relevage sont par exemple des butées de rotation haute 263 agencées sur les manivelles et qui limitent le débattement angulaire de l'abattant 22 vers le haut de manière similaire aux butées de rotation basse 262.

Dans ce cas la position angulaire de l'abattant par rapport aux manivelles est libre dans un secteur angulaire déterminé par les butées de rotation basses et hautes.

De telles butées anti-relevage peuvent également consister en des parties saillantes 132 agencées sur les parois latérales 13 sous lesquelles des parties de l'abattant viennent se placer au cours de la conversion interdisant alors à l'abattant de se soulever ou inversement des parties saillantes agencées sur l'abattant et venant se placer au cours de la conversion sous des parties fixes du logement pour aboutir au même résultat.

Dans un exemple de ce mode de réalisation, une profondeur de 500 mm du logement est réduite pour le volume restreint 15 à environ 380 mm au moyen d'un abattant articulé sur une bielle de 120 mm fixée sur un arbre d'entraînement 26 dont l'axe est 330 mm au dessus du plancher, le fond arrière 12 du logement étant incliné d'un angle d'environ 15 degrés.

Quel que soit le mode de réalisation mis en oeuvre, il est souhaitable que dans la position basse de l'abattant, y compris dans les positions intermédiaires lors de la conversion, un espace minimal soit maintenu entre le côté arrière 222 et le plancher 11.

Un tel espace, en pratique de l'ordre de 20 à 40 mm, doit être suffisant pour éviter de coincer un animal qui aurait par exemple une patte sous le volet arrière 24 et qui pourrait être blessé lors de la traction avant sans même pouvoir retirer sa patte.

Dans le premier mode de réalisation, un tel résultat est obtenu par le choix des dimensions et de la position dans laquelle le mouvement est arrêté.

Dans le second mode de réalisation, un tel résultat est obtenu par exemple en agençant des butées basses 133 sur les parois latérales 13 sur lesquelles butées basses viennent se reposer des parties de l'abattant et qui ont pour effet de maintenir le côté arrière 222 à la hauteur minimale souhaitée pour le volume restreint 15.

Dans une forme avantageuse de réalisation, non illustrée, d'un ensemble de logements suivant l'invention, une pluralité de logement sont juxtaposés pour former un rang de logements associés par leurs parois latérales 13. Dans ce cas une seule paroi latérale est utilisée pour séparer l'espace utile entre deux logements voisins et un arbre d'entraînement commun est utilisé pour assurer simultanément le mouvement de conversion de tous les abattants du rang de logements.

En fonction du nombre de logements d'un rang et donc du nombre d'abattants devant être mus simultanément l'arbre d'entraînement 25, 26 peut être entraîné directement ou au moyen d'un réducteur mécanique par un opérateur ou entraîné en rotation au moyen d'un moto-réducteur ou un autre type actionneur.

Comme il est compris de la description des différents modes de réalisation, dans une position relevée, l'abattant forme une partie de la paroi avant mais seulement à partir d'une certaine hauteur au-dessus du plancher du fait du positionnement en hauteur de l'axe d'entraînement 25, 26.

Entre l'arbre d'entraînement et le plancher 11, la paroi avant est complétée sur la largeur du logement par une paroi inférieure 21 qui au minimum interdit aux animaux de sortir du logement.

De préférence, cette paroi est une paroi pleine et lisse formant également une protection de l'espace situé devant le logement collectif contre les souillures provoquées par les animaux.

Le logement collectif de l'invention présente d'autres avantages.

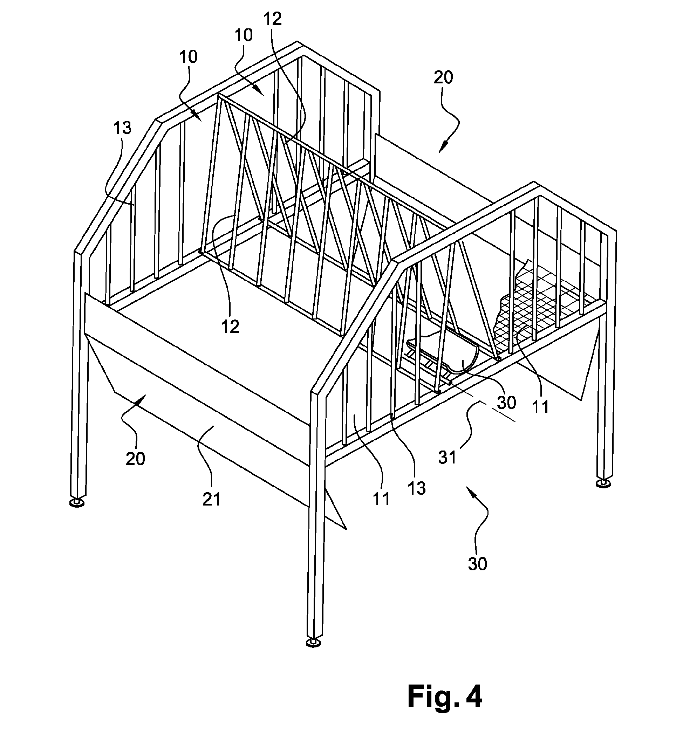

En particulier il est avantageux de réaliser des modules 30 de deux logements 10 accolées par leurs parois arrières 12 comme illustré sur la figure 4, les parois avants 20 se trouvant alors sur des bords opposés du module et accessibles depuis des allées parallèles lorsque les modules sont agencés en rangs de plusieurs modules juxtaposés.

Dans ce mode de réalisation de module de deux cages accolées par leurs parois arrières, les parois arrières de chacun des deux logements délimitent entre les deux logements, du fait de leur inclinaison par rapport à la verticale, un espace libre de section sensiblement triangulaire ou trapézoïdal dans lequel il est avantageux de placer un abreuvoir 30 ayant la forme d'une gouttière d'axe longitudinal parallèle aux bords avants ou arrières des logements et qui s'étend sur la longueur du rang de modules lorsque plusieurs modules sont agencés en rang.

De préférence cette gouttière est montée pivotante autour d'un axe de basculement 31 parallèle à l'axe longitudinal de la gouttière de sorte qu'elle puisse être basculée afin d'en assurer un nettoyage efficace.

Avantageusement les planchers 11 des deux logements d'un module ne sont pas reliés de sorte à laisser libre le basculement de la gouttière sous le niveau des planchers.

Lorsqu'un tel abreuvoir central est utilisé, la paroi arrière 12 est nécessairement réalisée avec des distances entre des barreaux verticaux formant la paroi arrière suffisantes pour permettre à un palmipède auquel un tel logement est destiné de passer la tête depuis le logement vers l'abreuvoir 30.

Pour éviter qu'un palmipède se trouve coincé au niveau du cou par le volet arrière 24 lors de la conversion, dans le cas ou ce palmipède serait en train de boire pendant la conversion et donc avec le cou passant entre les barreaux de la paroi arrière 12, avantageusement le volet arrière 24 comporte un agencement de barreaux verticaux libres à leurs extrémités du côté arrière 222 de l'abattant, formant un peigne aux dents plus ou moins longues comme illustré sur le détail de la figure 1a, présentant un espacement similaire à celui des barreaux de la paroi arrière et dont la position correspond sensiblement dans le sens de la largeur du logement à celles de ces mêmes barreaux de la paroi arrière.

Dans une variante de réalisation associée à cet agencement de la paroi arrière et du volet arrière, les barreaux du volet arrière 24 sont légèrement décalés dans le sens de la largeur du logement, de l'ordre d'un rayon de barreaux, par rapport à ceux de la paroi arrière et le dispositif réalise lors de la conversion un croisement des barreaux du volet arrière 24 et de ceux la paroi arrière 12 pendant une partie du mouvement de conversion.

Dans ce cas il est obtenu un recouvrement plus important de la trajectoire du côté arrière 222 avec la paroi arrière 12.

Considérant à nouveau l'abattant 22, celui-ci forme en position relevée la paroi avant du logement 10 et doit permettre d'introduire les animaux du logement ou de les en sortir de manière simple.

Une solution consiste à réaliser le toit 23 avec un ensemble de barreaux dans des plans verticaux, solution non illustrée, lorsque l'abattant est relevé, dont certains sont fixés à un cadre articulé sur l'abattant de sorte à former une porte du logement qui peut être ouverte dans une position déverrouillée ou fermée dans une position verrouillée.

Une autre solution consiste à réaliser le toit 23 avec un ensemble de barreaux dans des plans horizontaux comme illustré sur la figure 1 et le détail de la figure 1a.

Cette solution présente l'avantage de nécessiter moins de barreaux et permettre de déplacer latéralement les animaux dans le logement 10 lorsque l'abattant 22 est en position abaissée.

Dans ce cas un ou plusieurs barreaux du toit sont montés mobiles pour permettre le passage des animaux.

Les barreaux sont par exemple montés sur un cadre et sont coulissants sur des bords du cadre situés du côté des parois latérales.

Dans une forme de réalisation illustrée sur le détail figure 1a, au moins un barreau 231 du toit 23 est solidaire d'un cadre intérieur 232 de sorte à libérer le passage par un basculement du cadre intérieur vers le haut comme illustré ou vers le bas, cas non illustré.

Les logements de l'invention, dont d'autres formes de réalisations sont à la portée de l'homme du métier au vu des exemples décrits de manière détaillée, permettent de maintenir les animaux tels que les oies ou les canards dans un espace suffisant pour leur confort pendant la période de gavage tout en assurant une contention des animaux dans un espace réduit accessible avec une fatigue minimale pour le gaveur pendant les opérations de gavage sans risque de blesser les animaux.

## Revendications

1. Logement collectif (10) pour le gavage de palmipèdes comportant un plancher (11), une paroi arrière (12) fixe sur un bord arrière du logement, deux parois latérales (13) fixes sur des bords latéraux du logement et une paroi avant (20) sur un bord avant du logement, dans lequel logement la paroi avant (20) comporte un abattant (22), formant une partie supérieure de ladite paroi avant, mobile entre au moins une position relevée et au moins une position abaissée, ledit abattant comportant un côté avant (221) solidaire d'une structure du logement collectif (10) et un côté arrière (222) libre situé sur l'abattant à l'opposé du côté avant, **caractérisé en ce que** l'abattant (22) comporte un toit (23) et un volet arrière (24) s'étendant sensiblement sur une largeur de l'abattant et solidaire dudit toit au niveau d'un bord de liaison (223) situé sur l'abattant (22) entre le côté avant 221 et le côté arrière 222 et **en ce que** dans une position abaissée le toit (23) est sensiblement parallèle au plancher (11) et le volet arrière (24) est sensiblement vertical en avant de la paroi arrière (12) et sensiblement parallèle à ladite paroi arrière dans une position intermédiaire entre ladite paroi arrière (12) et la paroi avant (20).

2. Logement collectif suivant la revendication 1 dans lequel lors d'une conversion depuis la position relevée vers la position abaissée, l'abattant (22) est déplacé suivant un mouvement de rotation du toit (23) vers l'intérieur du logement et suivant un mouvement de traction avant du volet arrière (24).

3. Logement collectif suivant la revendication 2 dans lequel une trajectoire décrite par un côté arrière (222) de l'abattant situé du côté du bord arrière du logement est proche de la paroi arrière (12), sensiblement tangente ou sécante avec la dite paroi arrière, lors d'une partie de son mouvement pendant la conversion.

4. Logement collectif suivant la revendication 3 dans lequel la paroi arrière (12) est inclinée de sorte qu'une partie inférieure de ladite paroi arrière au niveau du plancher (11) est plus proche du bord avant du logement qu'une partie supérieure de ladite paroi arrière.

5. Logement collectif suivant la revendication 4 dans lequel la paroi arrière (12) comporte des barreaux situés dans un plan vertical et dans lequel le volet arrière (24) comporte au niveau du côté arrière (222) des barreaux libres à leurs extrémités formant un peigne, les dits barreaux libres à leurs extrémités étant agencés suivant la largeur du logement pour se trouver en vis à vis de barreaux de la paroi arrière (12) ou légèrement décalés d'un ordre de grandeur d'un rayon des barreaux.

6. Logement collectif suivant l'une des revendications 1 à 5 dans lequel le toit (23) comporte des barreaux agencés horizontalement, dans la position relevée de l'abattant, orientés suivant une largeur du logement de sorte à former en position relevée une partie supérieure de la paroi avant (20) du logement, au moins un barreau (231) dudit toit étant mobile de sorte à former dans le toit un passage libre élargi entre l'intérieur du logement collectif (10) et l'extérieur.

7. Logement collectif suivant l'une des revendications 2 à 6 dans lequel le toit (23) est fixé à un arbre d'entraînement (25) mobile en rotation autour d'un axe situé du côté du bord avant du logement, parallèle au bord avant du logement et au-dessus du plancher (11), et dans lequel le volet arrière (24) est solidaire du toit (23) articulé audit toit au niveau du bord de liaison (223).

8. Logement collectif suivant la revendication 7 dans lequel le volet arrière (24) est asservi en rotation en fonction de la position du toit (23) par une bielle (251) articulée à une première extrémité (252) sur une partie fixe du logement et articulée à une seconde extrémité (253) sur le volet arrière (24).

9. Logement collectif suivant l'une des revendications 2 à 6 dans lequel l'abattant (22) est solidaire d'un arbre d'entraînement (26), mobile en rotation autour d'un axe situé du côté du bord avant du logement, parallèle au bord avant du logement et au-dessus du plancher (11), par l'intermédiaire d'au moins une manivelle (261) fixée audit arbre d'entraînement, ledit abattant étant articulé au niveau de son côté avant (221) sur ladite manivelle autour d'un axe parallèle à l'axe de l'arbre d'entraînement (26) à une distance **RA** de l'axe dudit arbre d'entraînement.

10. Logement collectif suivant la revendication 9 dans lequel une ou des butées de rotation basse (262) agencées sur la ou les manivelles (261) et ou sur l'abattant (22) déterminent une position inférieure de l'abattant par rapport aux manivelles dans laquelle position le toit (23) est sensiblement dans le prolongement des manivelles.

11. Logement collectif suivant la revendication 10 dans lequel des butées anti-relevage (132, 263) sont agencées pour s'opposer à un déplacement vers le haut de l'abattant (22) lorsque ledit abattant est dans la position abaissée.

12. Module de deux logements collectifs conformes à l'une des revendications 4 ou 5 à 11 par la revendication 4 dans lequel les deux logements sont assemblés par leurs bords arrières, et dans lequel module un abreuvoir (30) est agencé entre les parois arrières (12) inclinées des logements collectifs

13. Ensemble de logements collectifs suivant l'une des revendications précédentes dans lequel une pluralité de logements collectifs (10) ou de modules de deux logements collectifs sont agencés suivant une rangée dans laquelle les logements ou les modules de deux logements sont juxtaposés par leurs bords latéraux, la séparation en deux logements voisins étant réalisée par une paroi latérale (13) commune.
